# EUROPÄISCHE PATENTSCHRIFT

(11) **EP 0 813 462 B1**
(45) Veröffentlichungstag und Bekanntmachung des Hinweises auf die Patenterteilung: **05.04.2000**
(21) Anmeldenummer: 96934759.0
(22) Anmeldetag: 19.10.1996
(51) Int. Cl.: B23Q 3/157, B23Q 3/155

(54) **WERKZEUGMASCHINE**
MACHINE TOOL
MACHINE-OUTIL

(30) Priorität: 05.01.1996 DE 19600274
(43) Veröffentlichungstag der Anmeldung: 29.12.1997
(73) Patentinhaber: Honsberg Lamb Sonderwerkzeugmaschinen GmbH, 42855 Remscheid (DE)
(72) Erfinder: KÖLBLIN, Rolf, D-42853 Remscheid (DE); SCHNEIDER, Reinhard, D-51702 Bergneustadt (DE)
(74) Vertreter: Selting, Günther, Dipl.-Ing.
(86) Internationale Anmeldenummer: EP9604551
(87) Internationale Veröffentlichungsnummer: WO9725181

(56) Entgegenhaltungen:
- DE-A- 2 925 341
- DE-A- 3 918 902
- DE-U- 9 202 245
- SOVIET INVENTIONS ILLUSTRATED Section PQ, Week 8436 17.Oktober 1984 Derwent Publications Ltd., London, GB; Class P56, AN 84-223981 XP002022493 & SU,A,1 065 133 (GORKI MECH ENG COMB) , 7.Januar 1984

## Beschreibung

Die Erfindung betrifft eine Werkzeugmaschine mit einem Maschinenständer und einer Wechseleinrichtung zum Wechseln von Spindelköpfen, die an einem Vertikalschlitten des Maschinenständers befestigt werden können, um eine Werkstückbearbeitung durchzuführen.

Aus DE 39 18 902 A1, die als nächtsliegender Stand der Technik angesehen wird, ist eine Werkzeugmaschine bekannt, die es ermöglicht, den am Vertikalschlitten befestigten Spindelkopf auszuwechseln. Zu diesem Zweck ist an dem Maschinenständer eine Wechseleinrichtung angebracht, die zwei um jeweils 180° schwenkbare Wechslerarme aufweist. Jeder Wechslerarm kann einen aus einem Magazin angelieferten Spindelkopf an dessen Oberseite ergreifen und in einer Schwenkbewegung von 180° vor dem Vertikalschlitten positionieren, so daß dieser Spindelkopf an den Vertikalschlitten übergeben und an diesem verriegelt wird. Der am Wechslerarm aufgehängte Spindelkopf kann relativ zu dem Wechslerarm um 90° gedreht werden, so daß die von dem Spindelkopf abstehenden Werkzeuge, die in der Arbeitsposition bezogen auf den Maschinenständer nach vorne weisen, bei der Übergabe an das Spindelkopfmagazin seitlich vom Maschinenständer wegweisen. Für einen schnellen Spindelkopfwechsel sind zwei Wechslerarme erforderlich, von denen der eine den Spindelkopf von dem Vertikalschlitten abnimmt, während der andere dem Vertikalschlitten einen neuen Spindelkopf zuführt. Hierbei ist für die Wechslerarme ein hoher technischer Aufwand erforderlich. Das Spindelkopfmagazin muß sich zu beiden Seiten des Maschinenständers erstrecken und erfordert einen aufwendigen Transportmechanismus.

Ferner ist aus EP 0 204 151 B1 eine Werkzeugmaschine bekannt, bei der die Spindelköpfe an einem Kopfwechsler aufgehängt sind, der auf dem Maschinenständer um eine vertikale Achse drehbar angeordnet ist. Die Spindelköpfe werden von oben ergriffen und über die Bewegungsbahn des Vertikalschlittens geschwenkt, der sie dann übernimmt. Diese Konstruktion erfordert einen Kopfwechsler mit großem Schwenkkreis auf dem Maschinenständer, wobei sich infolge der nach außen abstehenden Spindelköpfe und Werkzeuge ein großer Platzbedarf ergibt.

Aus DE 92 02 245 U1 ist eine Werkzeugmaschine bekannt, bei der der Ständer neben einer Übergabestation angeordnet ist. Am Ständer ist ein Vertikalschlitten senkrecht verfahrbar, der einen um eine horizontale Achse schwenkbaren Wechslerarm aufweist. An der Übergabestation sind zwei übereinander angeordnete Übergabeplätze vorgesehen, von denen jeder einen Spindelkopf aufnehmen kann. Der Wechslerarm wird seitlich an einen der beiden Spindelköpfe herangeschwenkt und zieht diesen dann horizontal zu dem Vertikalschlitten herüber. Für einen Spindelkopfwechsel sind außer einer Vertikalbewegung des Vertikalschlittens mehrere Hin- und Herbewegungen des Wechslerarmes erforderlich. Außerdem müssen die Spindelköpfe an der Übergabestation und am Vertikalschlitten in horizontalen Führungsleisten geführt werden, wobei zur Spindelkopfübergabe ein breiter Spalt zu überbrücken ist.

Der Erfindung liegt die Aufgabe zugrunde, eine Werkzeugmaschine zu schaffen, bei der die Wechseleinrichtung einen geringen Platzbedarf hat und imstande ist, mit einem einfachen Bewegungsablauf einen Wechsel der Spindelköpfe in kurzer Zeit vorzunehmen.

Die Lösung dieser Aufgabe erfolgt erfindungsgemäß mit den im Patentanspruch 1 angegebenen Merkmalen.

Bei der erfindungsgemäßen Werkzeugmaschine hat der Wechslerarm übereinander zwei Haltekupplungen für jeweils einen Spindelkopf und der Vertikalschlitten kann auf die Übergabehöhe jeder der Haltekupplungen verfahren werden. Der Wechslerarm ist um eine vertikale Achse in eine Übergabeposition schwenkbar, in der seine Haltekupplung an einen am Vertikalschlitten sitzenden Spindelkopf herangeschwenkt wird. Gleichzeitig ist an demselben Wechslerarm der neue Spindelkopf befestigt, der unter oder über dem auszuwechselnden Spindelkopf positioniert wird. Während der alte Spindelkopf an den Wechslerarm übergeben wird, bleibt der neue Spindelkopf noch mit dem Wechslerarm verbunden. Nachdem der Vertikalschlitten den alten Spindelkopf an den Wechslerarm übergeben hat, wird er vertikal verfahren, um in Ausrichtung mit dem neuen Spindelkopf zu kommen, der dann an den Vertikalschlitten übergeben wird. Auf diese Weise wird mit einer einzigen Schwenkbewegung des Wechslerarms in die Übergabeposition und anschließendem Zurückschwenken ein vollständiger Spindelkopfwechsel ausgeführt.

Vorzugsweise ist die Wechseleinrichtung separat von dem Maschinenständer angeordnet, wobei der Maschinenständer relativ zu der Wechseleinrichtung in Frontrichtung verfahrbar ist. Die Frontrichtung ist hierbei die Richtung der Zustellachse des Maschinenständers (Z-Achse), in der die Werkzeuge des am Vertikalschlitten befindlichen Spindelkopfes verlaufen. Grundsätzlich besteht die Möglichkeit, den Maschinenständer stillstehen zu lassen und die Wechseleinrichtung zu bewegen. Da der Maschinenständer in der Regel ohnehin in Richtung der Z-Achse verfahrbar ist, ist zweckmäßigerweise die Wechseleinrichtung feststehend. Die Bewegung in Z-Richtung ist zweckmäßig, um einen Spindelkopf, der an die Wechseleinrichtung übergeben wurde, vollständig von dem Zusammengreifen mit dem Vertikalschlitten zu lösen. Wenn dann der Vertikalschlitten auf die Übergabeposition des neuen Spindelkopfes verfahren wurde, wird der Maschinenständer vorgefahren, damit der Vertikalschlitten den neuen Spindelkopf sicher greifen kann. Dieses Vor- und Zurückfahren des Maschinenständers erfolgt jeweils nur über eine sehr kurze Strecke, die erforderlich ist, damit der Vertikalschlitten von dem die Wechseleinrichtung übergebenden Spindelkopf loskommen kann.

Der Wechslerarm ist vorzugsweise nur um 90° schwenkbar, wobei die Zuführeinrichtung den Spindelkopf mit seitlich von dem Maschinenständer wegweisenden Werkzeugen an den Wechslerarm übergibt. Dies bedeutet, daß der Wechslerarm eine reine Schwenkbewegung um 90° durchführt und dabei ebenfalls den an ihm hängenden Spindelkopf um 90° schwenkt. Die Vorderseite des Spindelkopfes, d.h. diejenige Seite, von der die Werkzeuge abstehen, weist dann seitlich vom Maschinenständer weg in Richtung der horizontalen X-Achse. In dieser Orientierung können die Spindelköpfe von dem Maschinenständer entfernt und in ein Spindelkopfmagazin übergeben werden. Vorteilhaft ist hierbei, daß die Frontseiten der Spindelköpfe und auch die davon abstehenden Werkzeuge leicht inspiziert und visuell kontrolliert werden können, da sie an einer Seite der Werkzeugmaschine für das Bedienungspersonal zugänglich sind. Dort ist auch die Anordnung einer automatisch arbeitenden Werkzeugüberwachungseinrichtung möglich. Die gesamte Fortbewegung und Aufbewahrung der Spindelköpfe erfolgt in dieser Orientierung mit in Richtung der X-Achse des Maschinenständers weisenden Werkzeugen.

Vorzugsweise greifen die Haltekupplungen des Wechslerarmes an Halteteilen an, die an einer Seitenwand jedes Spindelkopfes angeordnet sind. Hierdurch ergibt sich eine wesentliche Vereinfachung, weil der Wechslerarm plattenförmig ausgebildet werden kann und keine Ausleger benötigt, die den Spindelkopf von oben ergreifen. Dadurch wird die Wechseleinrichtung besonders klein und platzsparend.

Andererseits kann die Zuführeinrichtung, die die Spindelköpfe der Wechseleinrichtung zuführt und sie wieder von dieser abnimmt, eine Haltekupplung aufweisen, die an auf der Oberseite des Spindelkopfes vorgesehenen Halteteilen angreift. Während also die Wechseleinrichtung an Halteteilen angreift, die seitlich am Spindelkopf angeordnet sind, greift die Zuführeinrichtung an Halteteilen an, die an der Oberseite des Spindelkopfes angeordnet sind. Hierdurch sind die Kupplungssysteme von Wechseleinrichtung und Zuführeinrichtung funktionell und räumlich voneinander getrennt, so daß sie sich gegenseitig nicht stören und beeinflussen.

Gemäß einer bevorzugten Ausführungsform der Erfindung ist die Zuführeinrichtung mit einem Lift versehen, der auf die Übergabehöhe jeder der beiden Haltekupplungen der Wechseleinrichtung verfahrbar ist. Dieser Lift trägt einen Horizontalschlitten, der parallel zur Frontebene des Maschinenständers, also in X-Richtung, linear verfahrbar ist. Auf diese Weise kann die Zuführeinrichtung den Spindelkopf in die Haltekupplung der in Wartestellung befindlichen Wechseleinrichtung linear einfahren. Diese Bewegung ist schnell und geräuscharm durchführbar.

In weiterer Ausgestaltung der Erfindung ist der Schlitten auf einem Wagen angeordnet, der zum Bedienen eines Regalmagazins parallel zur Frontrichtung des Maschinenständers, also in Richtung der Z-Achse, verfahrbar ist. Dieser Wagen erlaubt es, mit der Zuführeinrichtung sowohl das Regalmagazin zu bedienen, als auch die Wechseleinrichtung. Mit dem Lift wird nicht nur die jeweilige Übergabehöhe an der Wechseleinrichtung angefahren, sondern auch die Höhe des Regalfachs, das zu bedienen ist. Ferner bewirkt der Horizontalschlitten das Einfahren in die Regalfächer und auch das Heranfahren der Spindelköpfe an den in Warteposition befindlichen Wechslerarm.

Im folgenden wird unter Bezugnahme auf die Zeichnungen ein Ausführungsbeispiel der Erfindung näher erläutert.

Es zeigen:
- Fig. 1: eine Draufsicht der Werkzeugmaschine,
- Fig. 2: eine Frontansicht aus Richtung des Pfeiles II von Fig. 1,
- Fig. 3: eine Seitenansicht aus Richtung des Pfeiles III von Fig. 1 und
- Fig. 4: eine perspektivische Darstellung eines Wechselvorganges, bei dem ein alter Spindelkopf gegen einen neuen ausgewechselt wird.

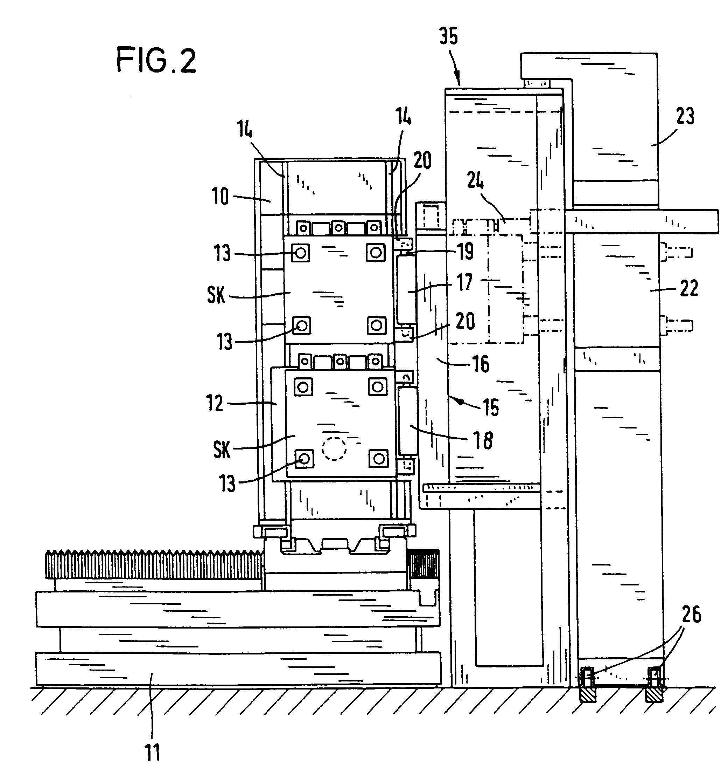

Die Werkzeugmaschine weist einen Maschinenständer 10 auf, der mit einem (nicht dargestellten) Schlitten auf dem Maschinenbett 11 in Richtung der X-Achse verfahrbar ist. Ferner ist der Maschinenständer 10 in Frontrichtung, d.h. in Richtung der Z-Achse verfahrbar. Eine Verschiebbarkeit des Ständers in Richtung der X-Achse ist nicht unbedingt erforderlich. An der Frontseite des Maschinenständers 10 ist ein Vertikalschlitten 12 angebracht, der in vertikaler Richtung (in Richtung der Y-Achse) verfahrbar ist. Der Vertikalschlitten 12 trägt den Spindelkopf SK, der an seiner Frontseite Werkzeuge 13 zum Bearbeiten eines (nicht dargestellten) Werkstücks aufweist. Diese Werkzeuge 13 sind beispielsweise Bohrer oder Fräser, die drehend angetrieben sind. Die Werkzeuge 13 können an dem Spindelkopf SK ausgewechselt werden. Der Spindelkopf SK enthält eine Aufnahme und ein Getriebe für den Drehantrieb der Werkzeuge 13. Der Antrieb der Werkzeuge erfolgt vom Innern des Maschinenständers aus über den Vertikalschlitten 12. Der Vertikalschlitten 12 ist mit einer Haltevorrichtung ausgestattet, die den Spindelkopf SK ergreifen und in definierter Position am Vertikalschlitten festhalten kann. Der Vertikalschlitten 12 ist längs der in Fig. 2 dargestellten vertikalen Führungsschienen 14 am Maschinenständer verfahrbar.

Die Wechseleinrichtung 15 ist ortsfest am Maschinenbett 11 an dem einen Ende des Verfahrweges des Maschinenständers 10 in X-Richtung angeordnet. Die Wechseleinrichtung 15 weist einen Wechslerarm 16 auf, der um eine vertikale Achse 37 um 90° schwenkbar ist. Der Wechslerarm 16 kann in die Warteposition 16a geschwenkt werden, in der er parallel zu dem Vertikalschlitten 12 verläuft, und in eine Übergabeposition 16b, in der er rechtwinklig zum Vertikalschlitten 12 verläuft, also in Richtung der Z-Achse. An dem Wechslerarm 16 sind zwei Haltekupplungen 17,18 übereinander angeordnet. Jede der Haltekupplungen 17,18 besteht aus einem Block, aus dem nach oben und unten Spannteile 19 gleichzeitig ausfahrbar sind. Jedes Spannteil 19 besteht aus einem prismenartigen Zentrierelement, das in ein komplementär geformtes Halteteil 20 des Spindelkopfes SK eingreifen kann, um den Spindelkopf an der Haltekupplung 17 in exakter Positionierung festzuhalten und zu verriegeln. Die Halteteile 20 sind horizontale Leisten, die an einer Seitenwand des Spindelkopfes SK angebracht sind und zwischen die die Kupplungseinrichtung 17 bzw. 18 bei eingezogenen Spannteilen 19 paßt. Wenn die Spannteile 19 ausgefahren werden, dringen sie in die Halteteile 20 und halten dadurch den Spindelkopf an der Kupplungseinrichtung 17 bzw. 18 fest.

Der Transport der Spindelköpfe zu und von den Haltekupplungen 17,18 erfolgt mit der Zuführeinrichtung 21. Diese weist einen Lift 22 auf, welcher an einem Wagen 23 vertikal verfahrbar ist. Der Lift 22 trägt einen Horizontalschlitten 24, der in Richtung der X-Achse verfahrbar ist und bei diesem Ausführungsbeispiel als Teleskopschlitten mit mehreren Teleskopgliedern ausgebildet ist. Der Horizontalschlitten 24 greift mit einer (nicht dargestellten) Haltekupplung an Halteteilen 25 an, die an der Oberseite des Spindelkopfes vorgesehen sind. Mit dem Lift 22 wird der Horizontalschlitten 24 auf die jeweilige Übergabehöhe der betreffenden Haltekupplung 17 oder 18 gefahren. Dann wird der Horizontalschlitten 24 ausgefahren und der Spindelkopf wird an der Haltekupplung 17,18 entlanggefahren, bis er die Übergabeposition erreicht hat. In der Übergabeposition werden die Spannteile 19 aus den Haltekupplungen 17 bzw. 18 ausgefahren, um an den Halteteilen 20 anzugreifen. Danach werden die Haltekupplungen des Horizontalschlittens 24 gelöst, so daß dieser ohne den Spindelkopf zurückfahren kann.

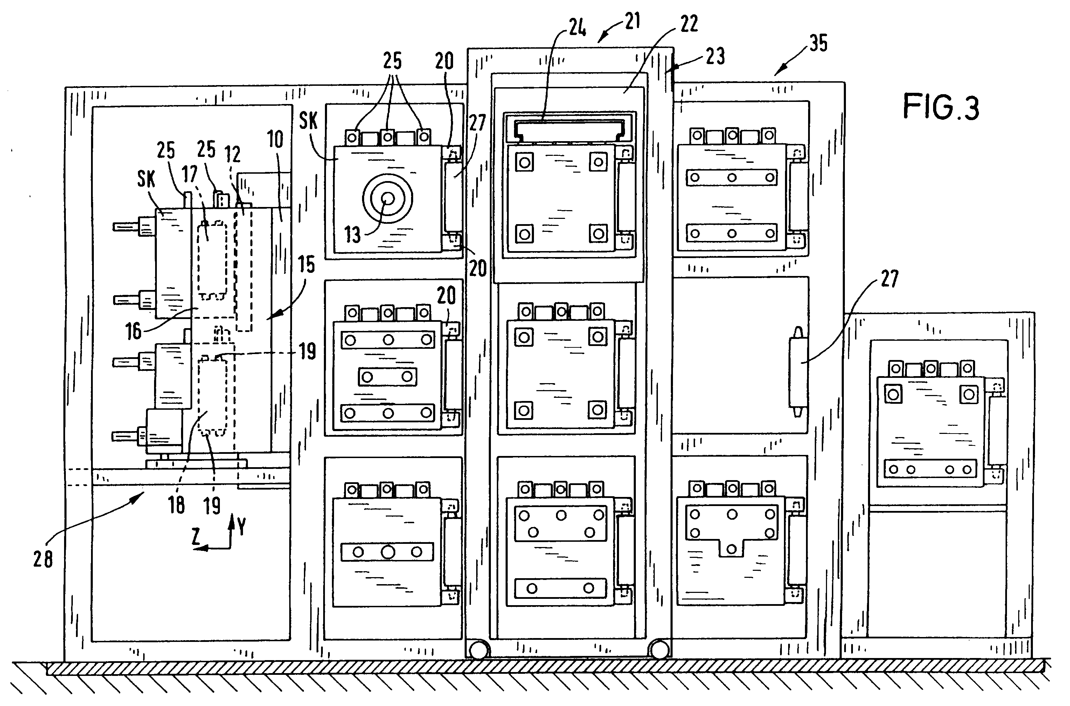

Seitlich von dem Maschinenständer 10 ist in Z-Richtung verlaufend das Regalmagazin 35 angeordnet, in dem die Spindelköpfe SK abgelegt werden können. Auf der dem Maschinenständer 10 abgewandten Seite des Regalmagazins 35 befinden sich Führungsschienen 26, auf denen der Wagen 23 läuft, der sich somit an der Außenseite des Regallagers entlangbewegt. Eine zusätzliche Führungsschiene befindet sich an der Oberkante des Regalmagazins. Das Regallager hat zahlreiche Fächer, in denen die Spindelköpfe SK eingehängt werden können. In jedem Fach ist eine Haltevorrichtung 27 (Fig. 3) vorgesehen, die von den Halteteilen 20 eines abgelegten Spindelkopfs SK umgriffen wird und den Spindelkopf in ähnlicher Weise festhält, wie dies die Haltekupplungen 17,18 tun. Die Haltevorrichtungen 27 sind jeweils an einer Seitenwand des Regallagers befestigt. Wenn der Lift 22 des Wagens 23 ein Regalfach anfährt, kann der Horizontalschlitten 24 in das Regalfach eingefahren werden, um an den Halteteilen 25 an der Oberseite des Spindelkopfes anzugreifen und den Spindelkopf somit aus dem Regalfach herauszunehmen. Der Spindelkopf wird dann in den Wagen 23 eingezogen und in die Übergabestation 28 gebracht, die sich am Ende des Regallagers 25 befindet. In der Übergabestation ist die Wechseleinrichtung 15 angeordnet, an deren Wechslerarm 16 der Spindelkopf übergeben werden kann.

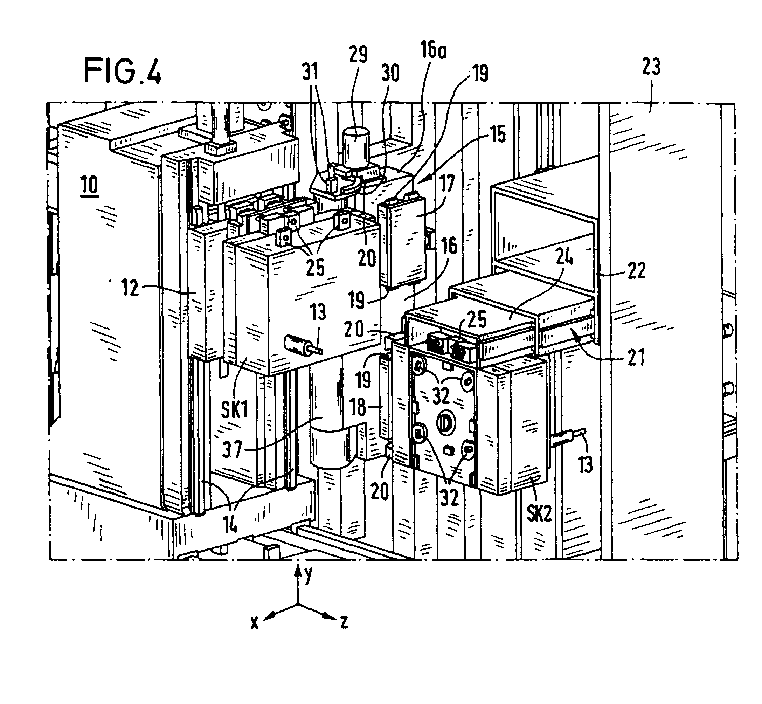

In Fig. 4 ist der Zustand dargestellt, daß am Vertikalschlitten 12 des Maschinenständers 10 ein der Einfachheit halber als "alter Spindelkopf" bezeichneter Spindelkopf SK1 angebracht ist, der gegen einen "neuen Spindelkopf" SK2 ausgewechselt werden soll. Der Spindelkopf SK2 ist von der Zuführeinrichtung 21 aus dem Regalmagazin 35 herausgeholt worden. Dann ist der Wagen 23 in die Übergabestation 28 gefahren worden. Nachdem der Lift 22 in die Übergabehöhe der unteren Haltekupplung 18 gefahren worden ist, ist der Horizontalschlitten 24 ausgefahren worden, wobei der Spindelkopf SK2 mit seinen Halteteilen 20 die Haltekupplung 18 des aufgeklappten Wechslerarmes 16 oben und unten umgreift. Dann wird die Haltekupplung 18 betätigt, um die Spannteile 19 auszufahren und in Angriff an die Halteteile 20 zu bringen. Nachdem der in der Übergabeposition befindliche Spindelkopf SK2 von dem Wechslerarm 16 übernommen worden ist, wird er von dem Horizontalschlitten 24 freigegeben und der Horizontalschlitten 24 wird in den Lift 22 zurückgezogen. Der Wechslerarm 16 wird nun um die vertikale Achse 37 herum um 90° verschwenkt. Dies geschieht durch einen auf der Oberseite des Wechslerarmes 16 sitzenden Antriebsmotor 29, der mit einem Ritzel in einen Zahnkranz 30 eingreift, welcher auf dem oberen Ende der ortsfesten und unverdrehbaren Achse 37 sitzt. Die Schwenkbewegung wird durch zwei Anschläge 31 auf exakt 90° begrenzt. Am Ende der Schwenkbewegung befindet sich der Spindelkopf SK2 parallel zum Schlitten 12 vor dem Maschinenständer 10. Der Verschiebebereich des Vertikalschlittens 12 am Maschinenständer 10 hat eine solche vertikale Erstreckung, daß beide Spindelköpfe SK1 und SK2 vor dem Maschinenständer 10 übereinander positioniert werden können.

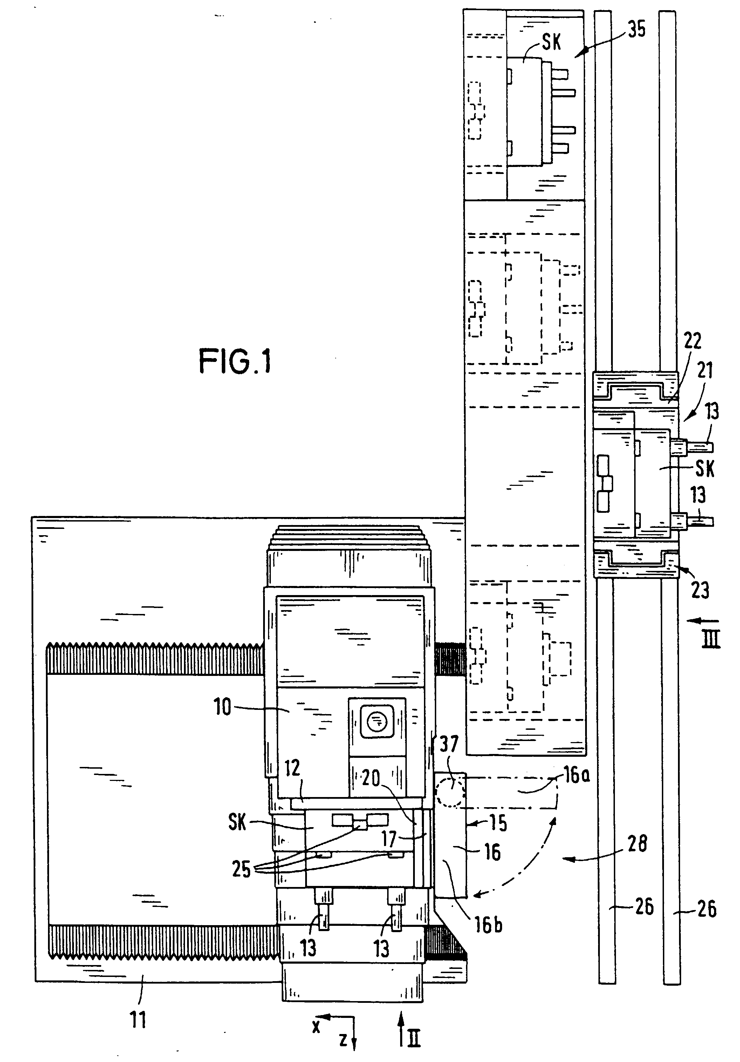

Während der Wechslerarm 16a sich in der Übergabeposition 16b (Fig. 1) befindet, hält er den neuen Spindelkopf SK2 fest und seine andere Haltekupplung 17 liegt in dieser Position bereits zwischen den Halteteilen 20 des anderen Spindelkopfes SK1. Durch Ausfahren der Spannteile 19 aus der Haltekupplung 17 wird nun auch der alte Spindelkopf SK1 von dem Wechslerarm 16 übernommen und kurz danach von dem Vertikalschlitten 12 freigegeben. In dieser Situation werden beide Spindelköpfe SK1,SK2 von dem Wechslerarm 16 getragen.

Um den Vertikalschlitten 12 von dem Eingriff mit dem alten Spindelkopf SK1 zu lösen und freizubekommen, wird der Maschinenständer 10 ein kurzes Stück entlang der Z-Achse zurückgefahren. Dann wird der Vertikalschlitten 12 auf die Position des unteren Spindelkopfes SK2 abgesenkt und der Maschinenständer 10 wird wieder ein kurzes Stück vorgefahren, damit die Eingriffsteile des Vertikalschlittens 12 in die entsprechenden Eingriffsteile 32 an der Rückseite des Spindelkopfes SK2 eingreifen können und die Antriebsverbindung zwischen dem Vertikalschlitten 12 und dem Spindelkopf SK2 hergestellt wird. Nachdem der Spindelkopf SK2 von dem Vertikalschlitten 12 übernommen wurde, wird er von der Haltekupplung 18 gelöst.

Dann wird der Wechslerarm 16 zusammen mit dem alten Spindelkopf SK1 in die in Fig. 4 dargestellte Warteposition 16a zurückgeschwenkt. Der Lift 22 wird auf die obere Übernahmeposition hochgefahren und der Horizontalschlitten 24 wird ausgefahren, um den Spindelkopf SK1 an seinen oberen Halteteilen 25 zu ergreifen und von der Haltekupplung 17 in Richtung der X-Achse zu entfernen. Dabei stehen die Werkzeuge 13 des Spindelkopfes SK1 seitlich in Richtung der X-Achse von dem Maschinenständer ab. Bereits in der Übergabestation 28 können die Werkzeuge inspiziert und ausgewechselt werden. Aus der Übergabestation 28 transportiert der Wagen 21 den Spindelkopf SK2 in das Regalmagazin 35, in das er durch Ausfahren des Horizontalschlittens 24 eingeschoben wird.

## Patentansprüche

1. Werkzeugmaschine mit einem Maschinenständer (10), der einen in der Höhe verfahrbaren Vertikalschlitten (12) zur Anbringung eines Spindelkopfes (SK) trägt, einer Wechseleinrichtung (15) mit einem um eine vertikale Achse (37) schwenkbaren Wechslerarm (16) mit einer Haltekupplung (17,18) zum Ergreifen eines von einer Zuführeinrichtung (21) bereitgestellten Spindelkopfes (SK) und zum Übergeben dieses Spindelkopfes an den Vertikalschlitten (12),
**dadurch gekennzeichnet,**
daß der Wechslerarm (16) übereinander zwei Haltekupplungen (17,18) für jeweils einen Spindelkopf (SK1,SK2) aufweist, und daß der Vertikalschlitten (12) auf die Übergabehöhe jeder der Haltekupplungen (17,18) verfahrbar ist.

2. Werkzeugmaschine nach Anspruch 1, dadurch gekennzeichnet, daß die Wechseleinrichtung (15) separat von dem Maschinenständer (10) angeordnet ist, wobei der Maschinenständer (10) relativ zu der Wechseleinrichtung (15) in Frontrichtung (Z-Achse) verfahrbar ist.

3. Werkzeugmaschine nach Anspruch 1 oder 2, dadurch gekennzeichnet, daß der Wechslerarm (16) um 90° schwenkbar ist und die Zuführeinrichtung (21) den Spindelkopf (SK) mit seitlich von dem Maschinenständer (10) wegweisenden Werkzeugen (13) an den Wechslerarm (16) übergibt.

4. Werkzeugmaschine nach einem der Ansprüche 1-3, dadurch gekennzeichnet, daß die Haltekupplungen (17,18) des Wechslerarmes (16) an Halteteilen (20) angreifen, die an einer Seitenwand jedes Spindelkopfes (SK) angeordnet sind.

5. Werkzeugmaschine nach einem der Ansprüche 1-4, dadurch gekennzeichnet, daß die Zuführeinrichtung (21) eine Haltekupplung aufweist, die an auf der Oberseite des Spindelkopfes (SK) vorgesehenen Halteteilen (25) angreift.

6. Werkzeugmaschine nach einem der Ansprüche 1-5, dadurch gekennzeichnet, daß die Wechseleinrichtung (15) ortsfest angeordnet ist, daß die Zuführeinrichtung (21) einen Lift (22) aufweist, der auf die Übergabehöhe jeder der beiden Haltekupplungen (17,18) der Wechseleinrichtung (15) fahrbar ist, und daß der Lift (22) einen Horizontalschlitten (24) trägt, der parallel zur Frontebene des Maschinenständers (10) (in Richtung der X-Achse) verfahrbar ist.

7. Werkzeugmaschine nach Anspruch 6, dadurch gekennzeichnet, daß der Lift (22) an einem Wagen (23) angeordnet ist, der zum Bedienen eines Regalmagazins (35) parallel zur Frontrichtung (in Richtung der Z-Achse) des Maschinenständers (10) verfahrbar ist.

8. Werkzeugmaschine nach Anspruch 7, dadurch gekennzeichnet, daß das Regalmagazin (35) Lagerplätze mit Tragvorrichtungen (27) aufweist, die an den seitlichen Halteteilen (20) der Spindelköpfe (SK) angreifen.

9. Werkzeugmaschine nach einem der Ansprüche 4-8, dadurch gekennzeichnet, daß die Haltekupplungen (17,18) des Wechslerarmes (16) nach oben und unten ausfahrbare Spannteile (19) aufweisen, die zentrierend in die Halteteile (20) des Spindelkopfes (SK) eingreifen.

## Claims

1. A machine tool comprising a machine stand (10) supporting a vertically movable vertical carrier (12) for attachment of a spindle head (SK), and an exchange unit (15) including an exchange arm (16) pivotable about a vertical axis (37) and provided with a holding coupling (17,18) for engagement with a spindle head (SK) delivered by a delivery means (21) and for transfer of the spindle head to the vertical carrier (12),
**characterized in**
that the exchange arm (16) comprises two holding couplings (17,18) arranged above each other and provided for respectively one spindle head (SK1,SK2), and that the vertical carrier (12) is movable to the transfer height of each of the holding couplings (17,18).

2. The machine tool according to claim 1, characterized in that the exchange unit (15) is arranged separately from the machine stand (10), the machine stand (10) being movable in the front direction (Z-axis) relative to the exchange unit (15).

3. The machine tool according to claim 1 or 2, characterized in that the exchange arm (16) is pivotable by 90° and the delivery means (21) passes the spindle head (SK) over to the exchange arm (16) with the tools (13) facing laterally away from the machine stand (10).

4. The machine tool according to any one of claims 1 to 3, characterized in that the holding couplings (17,18) of the exchange arm (16) engage holding portions (20) arranged in a side wall of each spindle head (SK).

5. The machine tool according to any one of claims 1 to 4, characterized in that the delivery means (21) is provided with a holding coupling for engagement with holding portions (25) arranged on the upper side of the spindle head (SK).

6. The machine tool according to any one of claims 1 to 5, characterized in that the exchange unit (15) is stationary, that the delivery means (21) comprises a lift (22) which can be moved to the transfer height of each of the two holding couplings (17,18) of the exchange unit (15), and that the lift (22) supports a horizontal carrier (24) which can be moved in parallel to the front plane of the machine stand (10) (in the direction of the X-axis).

7. The machine tool according to claim 6, characterized in that the lift (22) is arranged on a carriage (23) which can be moved in parallel to the forward direction of the machine stand (10) (in the direction of the Z-axis) for servicing a shelf magazine (35).

8. The machine tool according to claim 7, characterized in that the shelf magazine (35) includes storage compartments provided with holding means (27) engaging the lateral holding portions (20) of the spindle heads (SK).

9. The machine tool according to any one of claims 4 to 8, characterized in that the holding couplings (17,18) of the exchange arm (16) comprise upwardly and downwardly extendable clamping portions (19) for centered engagement into the holding portions (20) of the spindle head (SK).

## Revendications

1. Machine-outil comprenant un montant de machine (10) qui porte un coulisseau vertical (12) déplaçable en hauteur afin d'amener un nez de broche (SK), un dispositif de changement (15) avec un bras de changement (16) pouvant être pivoté autour d'un axe vertical (37) et ayant un couplage de maintien (17, 18) destiné à saisir un nez de broche (SK) mis à disposition par un dispositif d'amenée (21) et à transmettre ce nez de broche au coulisseau vertical (12), caractérisée en ce que le bras de changement (16) présente l'un sur l'autre deux couplages de maintien (17, 18) pour chacun des nez de broche (SK1, SK2), et en ce que le coulisseau vertical (12) peut être déplacé sur la hauteur de transfert de chacun des couplages de maintien (17, 18).

2. Machine-outil selon la revendication 1, caractérisée en ce que le dispositif de changement (15) est disposé séparément du montant de machine (10), le montant de machine (10) pouvant être déplacé dans le plan avant (axe Z) par rapport au dispositif de changement (15).

3. Machine-outil selon la revendication 1 ou 2, caractérisée en ce que le bras de changement (16) peut être pivoté de 90°, et en ce que le dispositif d'amenée (21) transmet le nez de broche (SK) au bras de changement (16) avec des outils (13) faisant latéralement saillie du montant de machine (10).

4. Machine-outil selon l'une des revendications 1 à 3, caractérisée en ce que les couplages de maintien (17, 18) du bras de changement (16) s'appuient sur des pièces de maintien (20) qui sont disposées sur une paroi latérale de chaque nez de broche (SK).

5. Machine-outil selon l'une des revendications 1 à 4, caractérisée en ce que le dispositif d'amenée (21) présente un couplage de maintien, qui s'appuie sur les pièces de maintien (25) prévues sur la partie supérieure du nez de broche (SK).

6. Machine-outil selon l'une des revendications 1 à 5, caractérisée en ce que le dispositif de changement (15) est disposé de manière fixe, en ce que le dispositif d'amenée (21) présente un élévateur (22) qui peut être transporté sur la hauteur de transfert de chacun des deux couplages de maintien (17, 18) du dispositif de changement (15), et en ce que l'élévateur (22) supporte un coulisseau horizontal (24) pouvant être déplacé parallèlement au plan avant du montant de machine (10) (dans le sens de l'axe X).

7. Machine-outil selon la revendication 6, caractérisée en ce que l'élévateur (22) est disposé sur un chariot (23) qui peut être déplacé parallèlement au plan avant (dans le sens de l'axe Z) du montant de machine (10) pour commander un chargeur à rayonnages (35).

8. Machine-outil selon la revendication 7, caractérisée en ce que le chargeur à rayonnages (35) présente des emplacements de stockage avec des dispositifs porteurs (27) qui s'appuient sur les pièces de maintien latérales (20) des nez de broche (SK).

9. Machine-outil selon l'une des revendications 4 à 8, caractérisée en ce que les couplages de maintien (17, 18) du bras de changement (16) présentent des éléments de serrage (19) pouvant être déplacés vers le haut et vers le bas et qui viennent en prise, pour son centrage, avec la pièce de maintien (20) du nez de broche (SK).
